# DEMANDE DE BREVET EUROPEEN

(11) **EP 4 843 864 A1**
(43) Date de publication de la demande: **25.11.2026**
(21) Numéro de dépôt: 26177895.5
(22) Date de dépôt: 11.05.2026
(51) Int. Cl.: B62B 3/12, A45C 5/14, A45C 7/00, B62B 5/00, B62B 7/12, B62B 9/20, B62D 63/06, B62K 27/00, A45C 9/00

(54) **DISPOSITIF DE TRANSPORT DE CHARGE POLYVALENT**

(30) Priorité: 23.05.2025 FR 2505563
(71) Demandeur: Sternytent, 44760 La Bernerie en Retz (FR)
(72) Inventeur: CLAVIER, Fabrice, 44760 La Bernerie-en-Retz (FR)
(74) Mandataire: Ipsilon

(57) **Abrégé**

Dispositif (1) de transport de charge comprenant un coffre (2) et des roues et un timon (9) couplables au coffre (2).

Les roues du dispositif (1) sont organisées en une première série de roues formée par des roues arrière (10) qui s'étendent en saillie du fond et de la paroi latérale arrière du coffre (2), une deuxième série de roues formée par au moins une roue avant (11) qui s'étend au-dessous du fond, qui est montée mobile dans le sens d'un rapprochement et d'un écartement du fond, et une troisième série de roues formée par des roues intermédiaires (12), de diamètre supérieur à celui des roues avant et arrière, couplées de manière amovible au coffre (2) et disposées entre la ou les roues avant (11) et les roues arrière (10).

Le dispositif (1) comprend un état désaccouplé des roues intermédiaires (12) du coffre (2) avec une première configuration dans laquelle le coffre (2) à fonction de valise s'étend à l'état dressé et repose au sol au moins par les roues arrière (10) et, un état couplé des roues intermédiaires (12) au coffre (2) avec une deuxième configuration en remorque et une troisième configuration en chariot.

## Description

La présente invention concerne un dispositif de transport de charge polyvalent.

Elle concerne en particulier un dispositif de transport de charge comprenant un coffre et des roues couplables au coffre, le coffre comprenant un corps ouvert par le dessus et un élément de fermeture du dessus du corps, le corps étant délimité par un fond, une paroi latérale avant, une paroi latérale arrière et deux parois latérales longitudinales reliant les parois latérales avant et arrière, le dispositif comprenant un timon couplable au coffre, ce timon étant équipé d'un organe d'attelage à un véhicule tracteur.

Un tel dispositif de transport de charge apte à former une remorque attelable à un véhicule tracteur, tel qu'un vélo, est connu. Toutefois, l'usage d'un tel dispositif de transport est aujourd'hui limité et l'utilisateur est confronté à de nombreuses situations où il lui est nécessaire d'abandonner son dispositif de transport avec son contenu, avec les risques de vol que cela comporte. Il est également connu un dispositif de charge polyvalent comme l'illustre le brevet EP 2 999 611. Toutefois, la polyvalence est limitée.

Un but de l'invention est de proposer un dispositif de transport de charge plus polyvalent pour limiter les périodes de non-utilisation.

A cet effet, l'invention a pour objet un dispositif de transport de charge comprenant un coffre et des roues couplables au coffre, le coffre comprenant un corps ouvert par le dessus et un élément de fermeture du dessus du corps, le corps étant délimité par un fond, une paroi latérale avant, une paroi latérale arrière et deux parois latérales longitudinales reliant les parois latérales avant et arrière, le dispositif comprenant un timon couplable au coffre, ce timon étant équipé d'un organe d'attelage à un véhicule tracteur, caractérisé en ce que les roues du dispositif sont organisées en au moins trois séries de roues, en ce que la première série de roues est formée par des roues dites arrière qui s'étendent en saillie du fond et de la paroi latérale arrière du coffre, en ce que la deuxième série de roues est formée par au moins une roue dite avant qui s'étend au-dessous du fond, sensiblement dans le plan de la paroi latérale avant, et qui est montée mobile dans le sens d'un rapprochement et d'un écartement du fond, en ce que la troisième série de roues est formée par des roues dites intermédiaires, de diamètre supérieur à celui des roues avant et arrière, couplées de manière amovible au coffre et disposées entre la ou les roues avant et les roues arrière de part et d'autre des parois latérales longitudinales du coffre et en ce que le dispositif comprend un état désaccouplé des roues intermédiaires du coffre avec une première configuration dans laquelle le coffre, à fonction de valise, s'étend à l'état dressé et repose au sol au moins par les roues arrière et, un état couplé des roues intermédiaires au coffre avec une deuxième configuration dans laquelle le timon est couplé au coffre, la au moins une roue avant est en position rapprochée du fond du coffre et le dispositif forme une remorque attelable à un véhicule tracteur et une troisième configuration dans laquelle, la au moins une roue avant est en position écartée du fond du coffre et le dispositif forme un chariot. La conception du dispositif de transport de charge permet de disposer d'un dispositif de transport à fonction de valise, de remorque et de chariot. Il doit être noté que par état couplé des roues intermédiaires au coffre, on entend que les roues intermédiaires sont en prise au niveau de leur axe de rotation avec une pièce complémentaire, tel qu'un arbre, équipant le coffre pour pouvoir porter le coffre. Par état désaccouplé des roues intermédiaires au coffre, on entend que les roues intermédiaires sont dans une position n'autorisant pas le support du coffre par les roues.

Selon un mode de réalisation de l'invention, le dispositif comprend une table pliante pour un passage entre un état monté et un état démonté, et le coffre est configuré pour un maintien à l'état démonté de la table dans une position dans laquelle elle s'étend à l'extérieur du coffre dans une position parallèle et en regard du fond du coffre.

Selon un mode de réalisation de l'invention, la paroi latérale avant du coffre est munie d'au moins deux poignées parallèles s'étendant chacune entre deux parois latérales longitudinales du coffre, lesdites poignées étant actives l'une, en première configuration, l'autre, en troisième configuration.

Selon un mode de réalisation de l'invention, les roues intermédiaires sont dimensionnées pour pouvoir, à l'état désaccouplé du coffre, être stockées au moins à l'intérieur du coffre.

Selon un mode de réalisation de l'invention, la ou au moins l'une des roues avant est reliée au coffre par une jambe présentant au moins deux positions de couplage au coffre décalées axialement.

Selon un mode de réalisation de l'invention, le dispositif comprend un système de retenue des roues intermédiaires en applique le long des parois latérales longitudinales du corps à l'extérieur du corps à l'état désaccouplé des roues intermédiaires du coffre.

Selon un mode de réalisation de l'invention, l'élément de fermeture du coffre est une couverture souple intégrant un soufflet pour le passage de l'élément de fermeture d'une position rapprochée du fond du coffre à l'état replié du soufflet à une position écartée du fond du coffre à l'état déployé du soufflet. De préférence, le dispositif de transport de charge comprend des réhausses articulées au corps du coffre, lesdites réhausses étant montées mobiles entre une position abaissée à l'intérieur du corps et une position relevée dans laquelle elles font au moins partiellement saillie du dessus du corps pour permettre un maintien de l'élément de fermeture à l'état déployé du soufflet.

Selon un mode de réalisation de l'invention, le timon est un timon démontable.

Selon un mode de réalisation de l'invention, dans la deuxième configuration, le timon s'étend en saillie de la paroi latérale avant du coffre. Dans cette deuxième configuration, le timon s'étend en saillie de la paroi latérale avant du coffre suivant une direction dite horizontale sensiblement parallèle au fond du coffre pour former un bras d'attelage.

Selon un mode de réalisation de l'invention, dans la troisième configuration, le timon s'étend au moins partiellement en saillie de la face du dessus du coffre. Dans cette troisième configuration, le timon s'étend au moins partiellement en saillie de la face du dessus du coffre depuis une zone de liaison au coffre disposée en avant de la paroi latérale avant du coffre pour former une poignée de manœuvre.

### Brève description des dessins

L'invention sera bien comprise à la lecture de la description suivante d'exemples de réalisation, en référence aux dessins annexés dans lesquels :
[Fig. 1a] représente une vue en perspective du dispositif de transport de charge en deuxième configuration en position abaissée des réhausses ;
[Fig. 1b] représente une vue en perspective du dispositif de transport de charge en deuxième configuration à l'état enlevé de l'élément de fermeture ;
[Fig. 2a] représente une vue en perspective du dispositif de transport de charge en deuxième configuration en position relevée des réhausses ;
[Fig. 2b] représente une vue en perspective du dispositif de transport de charge en deuxième configuration à l'état enlevé de l'élément de fermeture ;
[Fig. 3a] représente une vue arrière du dispositif de transport de charge en deuxième configuration en position abaissée des réhausses ;
[Fig. 3b] représente une vue arrière du dispositif de transport de charge en deuxième configuration en position relevée des réhausses ;
[Fig. 4a] représente une vue en perspective du dispositif de transport de charge en première configuration en position abaissée des réhausses ;
[Fig. 4b] représente une vue en perspective du dispositif de transport de charge en première configuration en position relevée des réhausses et avec les roues intermédiaires à l'état désaccouplé du coffre ;
[Fig. 5] représente une vue en perspective du dispositif de transport de charge en troisième configuration ;
[Fig. 6] représente une vue de côté du dispositif de transport de charge en troisième configuration.

Comme illustré aux figures, l'invention concerne un dispositif 1 de transport de charge polyvalent apte à répondre à différentes situations d'utilisation.

Ce dispositif 1 de transport de charge comprend un coffre 2 et des roues couplables au coffre 2. Ce coffre 2 comprend un corps 3, ici de forme générale parallélépipédique, ouvert par le dessus, et un élément 4 de fermeture du dessus du corps 3. Le corps 3 est délimité par un fond 5, une paroi latérale avant 6, une paroi latérale arrière 7 et deux parois latérales longitudinales 8 reliant les parois latérales avant 6 et arrière 7.

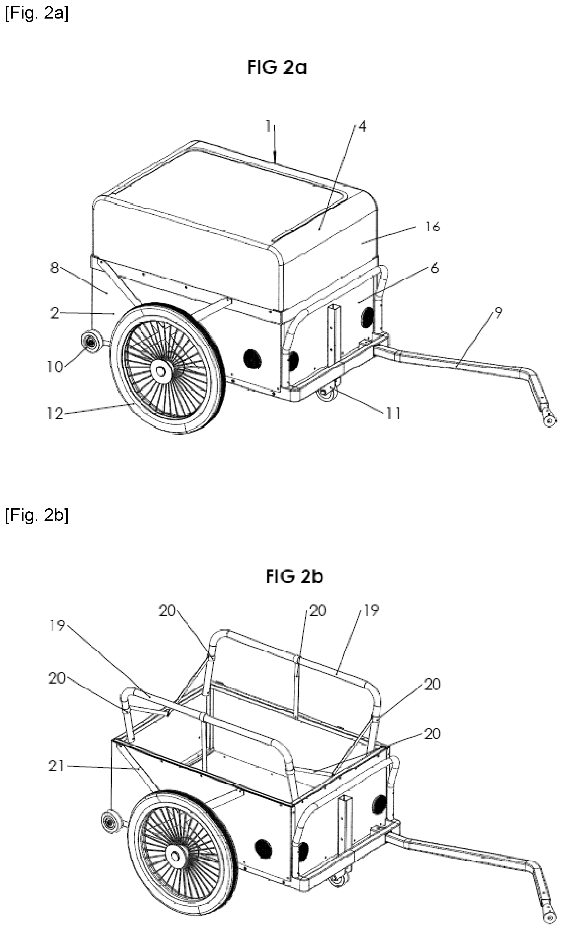

L'élément 4 de fermeture est constitué par un élément de couverture souple, tel qu'une simple bâche. L'élément 4 de fermeture du coffre 2 peut intégrer un soufflet 16 pour le passage de l'élément 4 de fermeture d'une position rapprochée du fond 5 du coffre 2 à l'état replié du soufflet 16, à une position écartée du fond 5 du coffre 2 à l'état déployé du soufflet 16, comme l'illustre par exemple la figure 2a. Un dispositif de verrouillage de l'élément 4 de fermeture en position fermée de la face du dessus du coffre 2 peut être prévu pour protéger le chargement du coffre contre par exemple le vol. Ce dispositif de verrouillage peut comprendre au moins un cadenas.

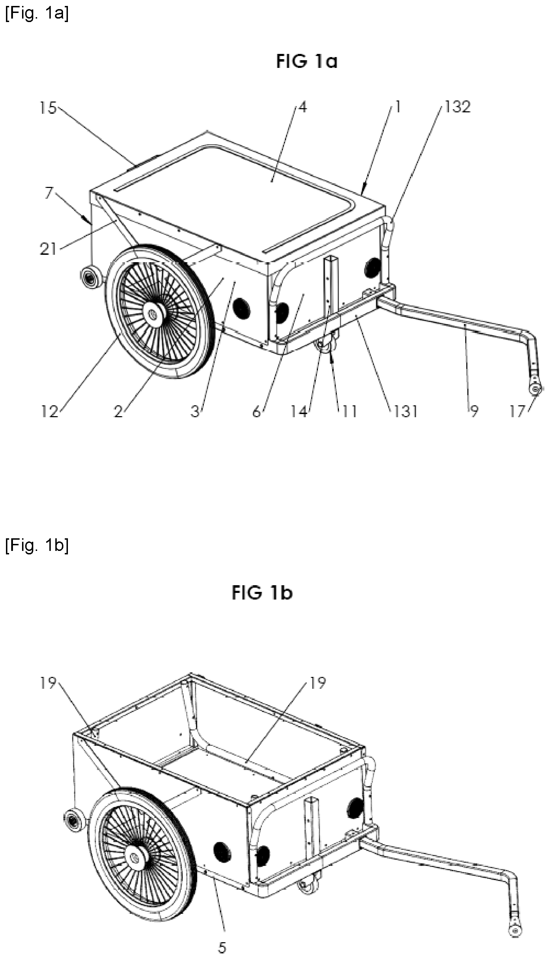

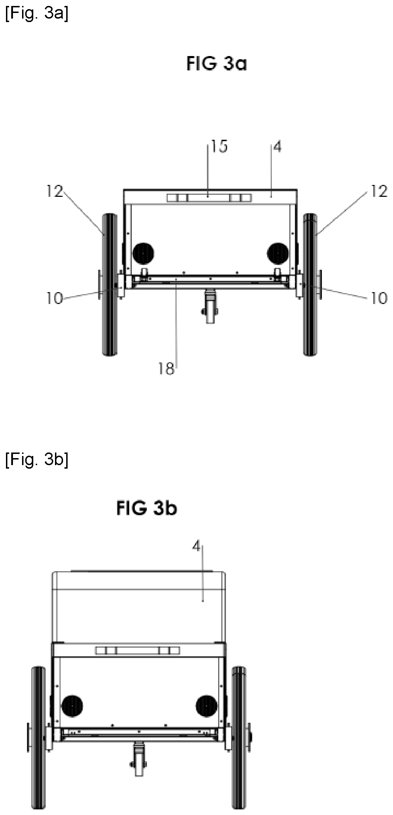

Pour permettre le maintien de l'élément 4 de fermeture en position écartée du fond du coffre 2, le dispositif 1 comprend des réhausses 19 formées chacune d'une structure articulée à une paroi latérale longitudinale 8 autour d'un axe parallèle à l'axe longitudinal du coffre. Chaque structure est ainsi mobile autour de son axe pour le passage d'une position abaissée à l'intérieur du corps du coffre dans laquelle elle s'étend contre ladite paroi latérale longitudinale 8 à une position relevée dans laquelle elle s'étend au moins partiellement en saillie du dessus du corps et forme un garde-corps le long d'une paroi latérale longitudinale 8 du coffre comme illustré aux figures 2b et 3b. Dans cette position relevée, les réhausses 19 peuvent maintenir l'élément 4 de fermeture en position écartée du coffre comme illustré à la figure 2a tandis qu'en position abaissée, l'élément 4 de fermeture peut être disposé en position rapprochée du fond 5 du coffre comme illustré à la figure 1a. Pour permettre le maintien des réhausses 19 en position relevée, le dispositif 1 comprend des sangles 20 s'étendant l'une entre une réhausse et la paroi latérale avant 6, l'autre ou une autre entre ladite réhausse et la paroi latérale arrière 7 et si nécessaire une dernière qui s'étend entre ladite réhausse et une paroi latérale longitudinale.

Le dispositif 1 comprend encore un timon 9 couplable au coffre 2. Ce timon 9 est équipé d'un organe 17 d'attelage à un véhicule tracteur, tel qu'une coiffe de boule d'attelage. Généralement, le timon qui s'étend côté paroi latérale avant 6 du dispositif 1 de transport de charge est, comme dans les exemples représentés, un timon démontable et est dimensionné et configuré pour pouvoir être stocké à l'intérieur du coffre 2.

Le dispositif 1 de transport comprend encore au moins trois séries de roues. La première série de roues est formée par des roues dites arrière 10 qui s'étendent en saillie du fond 5 et de la paroi latérale arrière 7 du coffre 2. Ces roues arrière 10 sont généralement des roues de plus petit diamètre et sont des roues non directrices. La deuxième série de roues est formée par au moins une roue dite avant 11 qui s'étend au-dessous du fond, c'est-à-dire au-dessous du plan passant par le fond 5 du corps 3, sensiblement dans le plan de la paroi latérale avant 6.

En pratique, l'axe de rotation de la roue avant 11 est en position en ligne droite de la roue avant 11, c'est-à-dire lorsque la roue avant 11 est disposée parallèle à l'axe longitudinal avant/arrière du coffre 3, écarté du plan de la paroi latérale avant 6 d'une distance au plus égale à 10 cm. La ou les roues avant 11 sont montées mobiles dans le sens d'un rapprochement ou d'un écartement du fond 5.

Dans l'exemple des figures, il est prévu une seule roue avant 11. Cette roue avant 11 est reliée au coffre 2 par une jambe 14. Cette jambe 14 présente au moins deux positions de couplage au coffre 2 décalées axialement. Cette jambe 14 vient, dans l'exemple représenté, s'insérer à coulissement dans un fourreau s'étendant le long de la face externe de la paroi latérale avant 6 suivant la direction dessus/fond 5 du coffre 2. Une goupille peut permettre d'immobiliser la jambe 14 dans une position donnée à l'intérieur du fourreau. La ou les roues avant 11 sont des roues directrices de petit diamètre, c'est-à-dire d'un diamètre compris entre 50 et 80 mm.

La troisième série de roues est formée par des roues intermédiaires 12 de diamètre supérieur à celui des roues avant et arrière. Ces roues intermédiaires 12 sont couplées de manière amovible au coffre 2 et sont disposées entre la ou les roues avant 11 et les roues arrière 10 de part et d'autre des parois longitudinales 8 du coffre 2. Ces roues intermédiaires 12 sont des roues non directrices dont le diamètre est généralement compris entre 16 pouces, soit environ 400 mm avec le pneu, et 20 pouces, soit environ 500 mm avec le pneu.

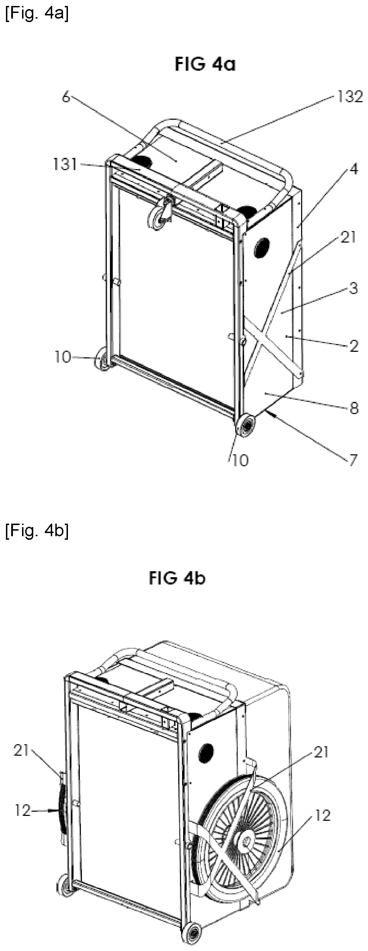

Le dispositif 1 présente donc, pour les roues intermédiaires 12, un état désaccouplé et un état accouplé au coffre 2. Idéalement, les roues intermédiaires 12 sont dimensionnées pour pouvoir, à l'état désaccouplé du coffre 2, être stockées à l'intérieur du coffre 2. L'état désaccouplé des roues intermédiaires 12 est représenté à la figure 4a. Dans cet état désaccouplé des roues intermédiaires 12, de préférence, le timon 9 est démonté et stockable à l'intérieur du coffre 2.

En variante ou en complément, le dispositif 1 peut comprendre un système 21 de retenue des roues intermédiaires 12 en applique le long des parois latérales longitudinales 8 du corps 3 à l'extérieur du corps 3 à l'état désaccouplé des roues intermédiaires 12 du coffre 2. Ce système 21 de maintien est ici formé par des sangles en croisillons délimitant avec le coffre un logement à l'intérieur duquel une roue intermédiaire désaccouplée du coffre peut s'insérer. L'état désaccouplé des roues intermédiaires 12, dans lequel les roues intermédiaires 12 sont maintenues proches du coffre par le système 21 de maintien, est visible à la figure 4b.

Le dispositif 1 peut, à l'état désaccouplé des roues 12 intermédiaires, présenter une configuration dite première configuration, dans laquelle le coffre 2, à fonction de valise, s'étend à l'état dressé et repose au sol au moins par les roues arrière 10. Pour faciliter cette utilisation sous forme d'une valise déplaçable par roulement au sol, la paroi latérale avant 6 du coffre 2 est munie d'une poignée 131 s'étendant au droit des roues arrière 10. Cette poignée s'étend entre deux parois latérales longitudinales 8 du coffre 2.

La paroi latérale arrière 7 du coffre 2 est, quant à elle, munie également d'une pièce 15 visible à la figure 3a qui s'étend également entre les deux parois latérales longitudinales 8 du coffre 2 et qui sert de piètement en coopération avec les roues arrière 12 dans la première configuration. Cette première configuration est visible aux figures 4a et 4b.

À l'état couplé des roues intermédiaires 12 au coffre 2 et du timon 9 au coffre 2, le dispositif 1 de transport présente une deuxième configuration, dans laquelle la ou les roues avant 11 sont en position rapprochée du fond du coffre 2 et le dispositif 1 forme une remorque attelable à un véhicule tracteur.

Dans cette deuxième configuration, le timon 9 s'étend en saillie de la paroi latérale avant 6 du coffre 2, généralement suivant une direction dite horizontale, sensiblement parallèle au fond du coffre, pour former un bras d'attelage, comme illustré à la figure 2a par exemple. Le dispositif 1 peut alors être attelé à un engin roulant, tel qu'un vélo.

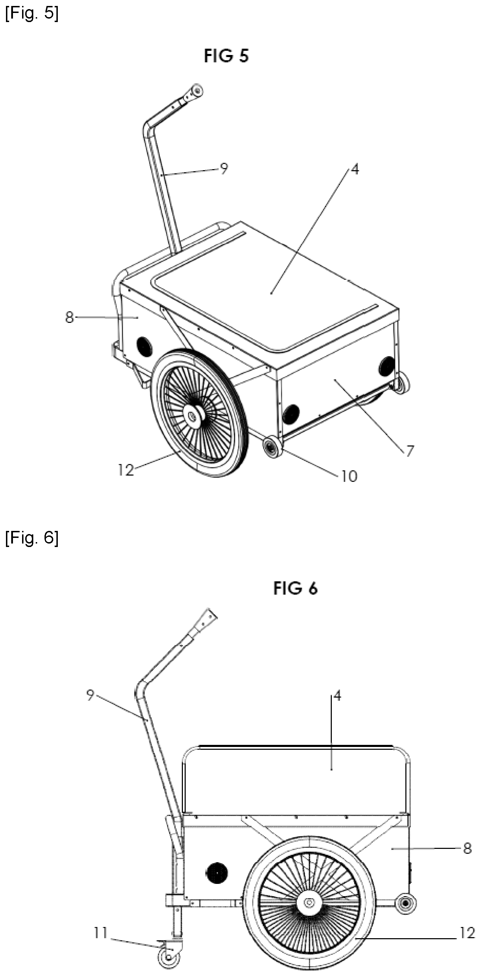

A l'état couplé des roues intermédiaires au coffre 2, et généralement du timon 9 au coffre 2, le dispositif 1 présente une troisième configuration, dans laquelle la au moins une roue avant 11 est en position écartée du fond 5 du coffre 2, et le dispositif 1 forme un chariot. Dans cette troisième configuration illustrée aux figures 5 et 6, lorsque le timon 9 est couplé au coffre 2, ce timon 9 s'étend au moins partiellement en saillie de la face du dessus du coffre 2, depuis une zone de liaison au coffre 2 disposée en avant de la paroi latérale avant du coffre 2, pour former une poignée de manœuvre ou de saisie. Dans cette troisième configuration, la poignée représentée en 132 aux figures qui équipe la paroi latérale avant 6 du coffre est active.

En effet, la paroi latérale avant 6 du coffre 2 est munie d'au moins deux poignées 131, 132 parallèles s'étendant chacune entre deux parois latérales longitudinales 8 du coffre 2. Ces poignées 131 et 132 sont actives, l'une 131, en première configuration, l'autre 132, en troisième configuration. La poignée 132 active en troisième configuration s'étend dans l'alignement de la poignée 15 équipant la paroi latérale arrière. Les poignées équipant la paroi latérale avant et la paroi latérale arrière du coffre peuvent être des poignées réglables en hauteur pour s'étendre dans une première position en affleurement de la face du dessus du coffre et dans une deuxième position au-dessus de la face du dessus du coffre. Ce réglage des poignées permet de pouvoir porter et sangler des objets de longueur supérieure à celle de la remorque au-dessus de la remorque tout en conservant un accès à l'intérieur du coffre. A titre d'exemple, ces poignées peuvent être, pour leur réglage en hauteur, des poignées coulissantes le long des parois latérales avant et arrière du coffre ou des poignées télescopiques ..

Pour passer de la deuxième configuration, représentée aux figures 1a et 2a, à la troisième configuration, représentée aux figures 5 et 6, il suffit d'abaisser la roue avant 11 ou de la remettre et de l'amener en position basse si elle a été retirée, et de modifier la position du timon 9.

Pour le passage en première configuration, il suffit de désaccoupler les roues intermédiaires 12 et le timon 9 et, de préférence, d'enlever la ou les roues avant.

Pour parfaire le dispositif 1, le dispositif comprend une table 18 pliante pour un passage entre un état monté et un état démonté et le coffre 2 est configuré pour un maintien, à l'état démonté de la table 18, dans une position dans laquelle elle s'étend à l'extérieur du coffre 2, dans une position parallèle et en regard du fond 5 du coffre 2. Cette table est plus particulièrement visible à la figure 3a.

## Revendications

1. Dispositif (1) de transport de charge comprenant un coffre (2) et des roues couplables au coffre (2), le coffre (2) comprenant un corps (3) ouvert par le dessus et un élément (4) de fermeture du dessus du corps (3), le corps (3) étant délimité par un fond (5), une paroi latérale avant (6), une paroi latérale arrière (7) et deux parois latérales longitudinales (8) reliant les parois latérales avant (6) et arrière (7), le dispositif (1) comprenant un timon (9) couplable au coffre (2), ce timon (9) étant équipé d'un organe (17) d'attelage à un véhicule tracteur, **caractérisé en ce que** les roues du dispositif (1) sont organisées en au moins trois séries de roues, **en ce que** la première série de roues est formée par des roues dites arrière (10) qui s'étendent en saillie du fond (5) et de la paroi latérale arrière (7) du coffre (2), **en ce que** la deuxième série de roues est formée par au moins une roue dite avant (11) qui s'étend au-dessous du fond (5), sensiblement dans le plan de la paroi latérale avant (6), et qui est montée mobile dans le sens d'un rapprochement et d'un écartement du fond (5), **en ce que** la troisième série de roues est formée par des roues dites intermédiaires (12), de diamètre supérieur à celui des roues avant et arrière, couplées de manière amovible au coffre (2) et disposées entre la ou les roues avant (11) et les roues arrière (10) de part et d'autre des parois latérales longitudinales (8) du coffre (2) et **en ce que** le dispositif (1) comprend un état désaccouplé des roues intermédiaires (12) du coffre (2) avec une première configuration dans laquelle le coffre (2), à fonction de valise, s'étend à l'état dressé et repose au sol au moins par les roues arrière (10) et, un état couplé des roues intermédiaires (12) au coffre (2) avec une deuxième configuration dans laquelle le timon (9) est couplé au coffre (2), la au moins une roue avant (11) est en position rapprochée du fond (5) du coffre (2) et le dispositif (1) forme une remorque attelable à un véhicule tracteur et une troisième configuration dans laquelle, la au moins une roue avant (11) est en position écartée du fond (5) du coffre (2) et le dispositif (1) forme un chariot.

2. Dispositif (1) de transport de charge selon la revendication 1, **caractérisé en ce que** le dispositif (1) comprend une table (18) pliante pour un passage entre un état monté et un état démonté, et **en ce que** le coffre (2) est configuré pour un maintien à l'état démonté de la table (18) dans une position dans laquelle elle s'étend à l'extérieur du coffre (2) dans une position parallèle et en regard du fond (5) du coffre (2).

3. Dispositif (1) de transport de charge selon l'une des revendications 1 ou 2, **caractérisé en ce que** la paroi latérale avant (6) du coffre (2) est munie d'au moins deux poignées (131, 132) parallèles s'étendant chacune entre deux parois latérales longitudinales (8) du coffre (2), lesdites poignées (131, 132) étant actives l'une (131), en première configuration, l'autre (132), en troisième configuration.

4. Dispositif (1) de transport de charge selon l'une des revendications 1 à 3, **caractérisé en ce que** les roues intermédiaires (12) sont dimensionnées pour pouvoir, à l'état désaccouplé du coffre (2), être stockées au moins à l'intérieur du coffre (2).

5. Dispositif (1) de transport de charge selon l'une des revendications 1 à 4, **caractérisé en ce que** la ou au moins l'une des roues avant (11) est reliée au coffre (2) par une jambe (14) présentant au moins deux positions de couplage au coffre (2) décalées axialement.

6. Dispositif (1) de transport de charge selon l'une des revendications 1 à 5, **caractérisé en ce qu'**il comprend un système (21) de retenue des roues intermédiaires (12) en applique le long des parois latérales longitudinales (8) du corps (3) à l'extérieur du corps (3) à l'état désaccouplé des roues intermédiaires (12) du coffre (2).

7. Dispositif (1) de transport de charge selon l'une des revendications 1 à 6, **caractérisé en ce que** l'élément (4) de fermeture du coffre (2) est une couverture souple intégrant un soufflet (16) pour le passage de l'élément (4) de fermeture d'une position rapprochée du fond (5) du coffre (2) à l'état replié du soufflet (16) à une position écartée du fond (5) du coffre (2) à l'état déployé du soufflet (16).

8. Dispositif (1) de transport de charge selon l'une des revendications 1 à 7, **caractérisé en ce que** le timon (9) est un timon démontable.

9. Dispositif (1) de transport de charge selon l'une des revendications 1 à 8, **caractérisé en ce que**, dans la deuxième configuration, le timon (9) s'étend en saillie de la paroi latérale avant (6) du coffre (2).

10. Dispositif (1) de transport de charge selon l'une des revendications 1 à 9, **caractérisé en ce que**, dans la troisième configuration, le timon (9) s'étend au moins partiellement en saillie de la face du dessus du coffre (2).
